# EUROPEAN PATENT SPECIFICATION

(11) **EP 2 112 394 B1**
(45) Date of publication and mention of the grant of the patent: **15.08.2012**
(21) Application number: 08154897.6
(22) Date of filing: 21.04.2008
(51) Int. Cl.: F16D 48/06

(54) **Method for engaging a clutch and an agricultural machine comprising a clutch**
Verfahren zum Schließen einer Kupplung und eine landwirtschaftliche Arbeitsmaschine mit einer Kupplung
Procédé d'engagement d'un embrayage et machine agricole comprenant un embrayage

(43) Date of publication of application: 28.10.2009
(73) Proprietor: CNH Belgium N.V., 8210 Zedelgem (BE)
(72) Inventor: Osselaere, Guy H.J., 8210 Zedelgem (BE); Pauwels, Karel C.F., 8870 Izegem (BE)
(74) Representative: CNH IP Department

(56) References cited:
- EP-A- 1 356 721
- EP-A- 1 382 885
- FR-A- 2 626 827
- FR-A- 2 637 036

## Description

### Field of the invention

The present invention relates generally to systems for transmission of mechanical power. It relates more particularly to a method for improving the coupling of a clutch on an agricultural machine.

### Background of the invention

Clutches are widely used to couple driven rotary shafts to driving rotary shafts, i.e. to couple a load to a source of power. Because in most instances a driven shaft is initially at a standstill and a driving shaft is rotating when coupling, slippage occurs between engaging surfaces of the driven and driving members of the clutch while friction between these surfaces accelerates the driven shaft to the speed of the driving shaft during engagement of the clutch. This relative motion of slippage in the presence of friction generates heat.

A disc clutch is one type of clutch often provided in agricultural machinery. Such a disc clutch includes at least one generally disc-shaped driving member or pressure plate and at least one generally disc-shaped driven member or clutch plate. A spring is foreseen to keep the plates a distance from each other to prevent unwanted coupling. An actuator located within or upon the clutch forces the pressure plate against the clutch plate when clutch engagement is desired.

When a signal is given to the actuator to engage the clutch, the actuator has to overcome the pressure of the spring before the pressure plate actually starts to move towards the clutch plate. Once the force of the actuator is above the tension of the spring, the pressure plate will move towards the clutch plate until they make contact. The force by the actuator will then be increased, such that the plates will start to couple. When the angular speeds of the driven and driving members of the clutch are equal, engagement of the clutch is complete and the pressure of the actuator will be levelled such that the engagement between the plates is maintained. Such operation is illustrated in EP-A-1 382 885 for starting up a threshing rotor in a combine harvester.

However, when engaging the plates, the driven shaft generates a torque while speeding up the load. If this torque on the load is above the structural limitations of the load, the load itself might be damaged.

FR-A-2 626 827, which represents the closest prior art, describes a drive line comprising a gearbox and a hydraulic clutch for propelling a utility vehicle. A control system monitors the torque in a drive shaft and steers the valve that feeds the clutch, in response to the rate at which the torque rises. Excessive torque rise will temporarily interrupt the valve and stabilise the pressure in the valve. Then the system further monitors the torque and, when the actual torque increment is acceptable again, feeds further oil to the clutch until full engagement is realised.

### Object of the invention

The present invention seeks to mitigate the problems resulting from the increase of torque on the clutch and on the load.

### Summary of the invention

According to the present invention, there is provided a method for coupling a header in a combine or forage harvester to a power source by means of a clutch, the clutch comprising at least one pressure plate connected to the power source, at least one clutch plate connected to the header and located near the at least one pressure plate to allow contact with the at least one pressure plate, an actuator connected with the at least one pressure plate and capable of forcing the at least one pressure plate against the at least one clutch plate, the method comprising the steps of:
- initially increasing the pressure of the actuator for a first time interval to bring the at least one pressure plate into contact with the at least one clutch plate,
- gradually increasing the pressure of the actuator during a second time interval to allow the at least one clutch plate to be engaged with the at least one pressure plate, and
- after said second time interval, levelling the pressure of the actuator to maintain the engagement of the at least one pressure plate with the at least one clutch plate to allow the header to be driven by the power source, characterised in that the gradually increasing step consists of gradually increasing the pressure of the actuator while applying at least once a pressure decrease lasting a short time to create at least one pressure dip for decreasing at least temporarily the torque generated in driving the header,

wherein the at least one pressure dip is generated by a control system, the control system detecting the actual torque applied on the header and decreasing the pressure of the actuator for a short interval when the actual torque exceeds a predetermined value.

### Brief description of the drawings

An embodiment of the invention will now be described in further detail, by way of example only, with reference to the accompanying drawings, in which:
Figure 1 is a schematic view of a clutch of a type known in the art;
Figure2 is a graphical representation of the normal pressure characteristic applied by the actuator on the pressure plates and the torque generated on a load; and
Figure 3 is a graphical representation of the desired and the actual pressure characteristic applied by the actuator and the torque on the load when applying the method according to the invention.

### Detailed description of the preferred embodiment(s)

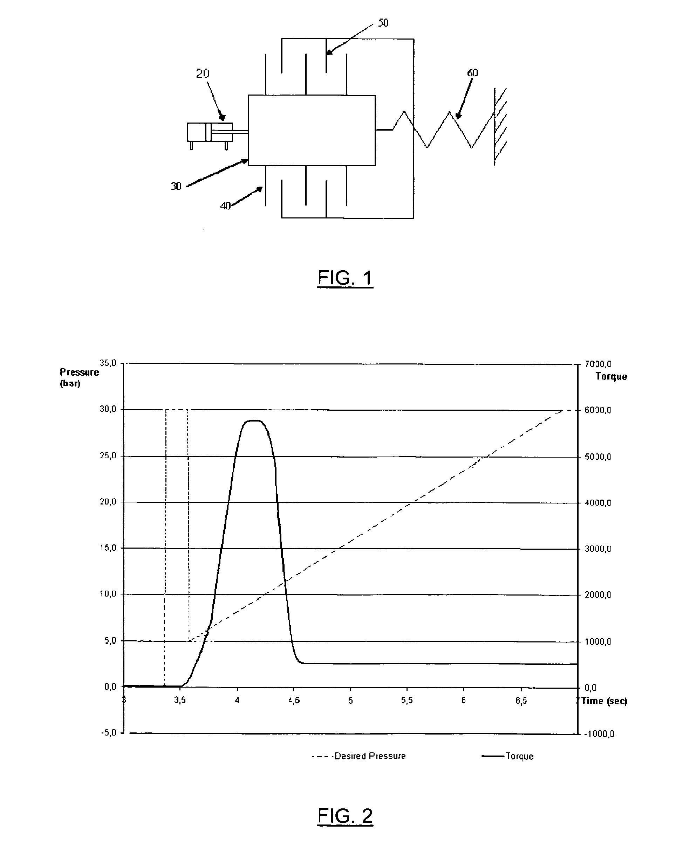

Figure 1 shows a clutch assembly having a clutch housing 30 connected to a driving rotary shaft (not shown). Pressure plates 40 are connected to the clutch housing 30. An actuator 20 is able to move the clutch assembly towards the clutch plates 50 against the pressure of the spring 60. The clutch plates 50 are connected to the driven rotary shafts to drive a load (not shown).

As can be seen from Figure 2, the application of pressure by the actuator 20 on the pressure plates 40 can be divided into three regions: the first region being a region where the pressure of the actuator is rapidly increased. This is due to the fact that there is a small gap between the pressure plates 40 and the clutch plates 50. A short injection of pressure fluid is used to move the pressure plates 40 against the clutch plates 50. A second region is where the plates are starting to make contact, but the pressure plates 40 are still rotating at a higher speed than the clutch plates 50. By increasing the pressure of the pressure plates 40 against the clutch plates 50, the clutch plates 50 will start to rotate with the pressure plates 40. Finally, when the plates 40, 50 are fully engaged and rotating at the same speed, the engagement is complete and the pressure of the actuator is held constant to allow the plates to remain in contact such that full power is transferred from the power source (not shown) to the load (also not shown).

Figure 2 shows the increase in torque on the load occurring in the second region. When increasing the pressure applied by the pressure plates 40 on the clutch plates 50, an increasing torque is transferred upon the load. It is important that this torque increase is below the structural limitations of the load.

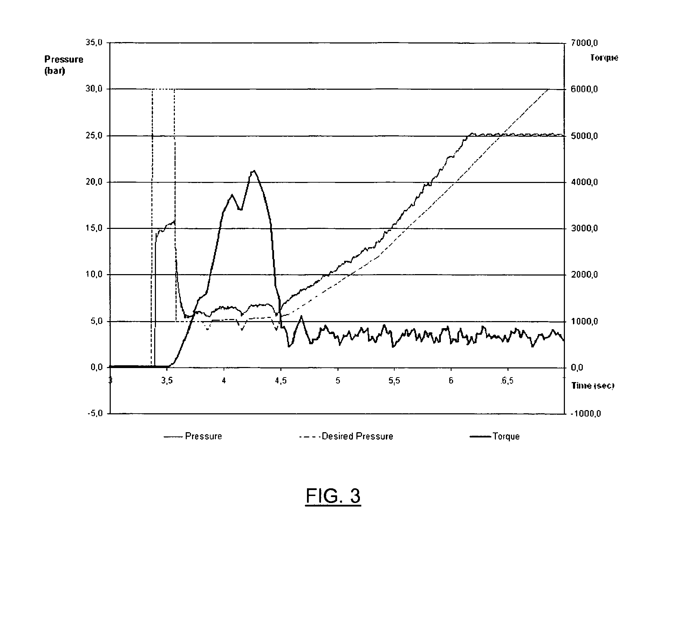

This limitation in the torque is accomplished by the inventive method shown in Figure 3.

As explained above, a certain time interval is present between the actual coupling command and the moment the pressure plates 40 and clutch plates 50 make contact and start to engage. This is due to the distance between the two plates and the force needed to overcome the force of the spring 60 which keeps the plates a small distance from each other. This spring force needs to be overcome before the two plates start to move towards each other. It is important to keep this time interval as short as possible, since it will slow down the overall engagement time of the driving rotary shaft with the driven rotary shaft.

Therefore, when a signal is given that the load should be engaged with the power source, full pressure is given to the actuator 20 for a certain time interval. When the actuator 20 receives this full pressure signal, the actuator 20 will try to overcome the pressure of the spring 60 and the distance between the plates as fast as possible. It is important that before the pressure plates 40 and clutch plates 50 have made full contact, the pressure is reduced such that full engagement of the plates is not yet accomplished. This interval is known in the art as the pre-fill period of the clutch.

When the pressure plates 40 and clutch plates 50 start making contact and the pressure is decreased after the pre-fill period, the pressure of the actuator 20 should rise again slowly to gradually increase engagement and to allow the pressure plates 40 and the clutch plates 50 to engage. As a result, the corresponding torque on the load increases as well. Instead of constantly increasing the pressure of the actuator 20 until full engagement of the clutch as in the prior art, the pressure is increased gradually but, at least once or at certain intervals, it is decreased during a short time interval to create pressure dips. During these pressure dips, the pressure plates 40 are released from the clutch plates 50 for a short period such that the built-up torque on the load is decreased. By creating pressure dips while engaging the pressure plates 40 and the clutch plates 50, the overall maximum torque is reduced. In order to lower the torque such that it remains below the maximum allowable torque on the load, pressure dips should occur at regular intervals.

Since the actuator 20 often accomplishes engagement of a clutch according to a predetermined pressure characteristic, which is loaded into software used to control the engagement of the clutch, the pressure dip or dips and the intervals in between can advantageously be incorporated into this pressure characteristic and loaded into the software of the system for operating the actuator 20.

However, it is also envisageable to provide a control system that monitors the actual torque on the load and decreases the pressure of the actuator 20 for a short interval whenever the torque exceeds a predetermined value. Such system automatically creates pressure dips. Alternatively, the gradient of the torque can be used as a value for establishing unallowable torque conditions and preventing that the torque on the load increases above the acceptable value. In this manner, an optimal engagement of the clutch will be accomplished without unnecessary pressure dips, which would slow down the engagement time of the load to the power source.

Because the increase in torque only occurs during the period when the pressure plates 40 and clutch plates 50 are starting to engage, it is not necessary to provide these pressure dips throughout the entire engagement period. Once the clutch plates 50 start rotating with the pressure plates 40 and the initial inertia of the load is thus overcome, the torque on the load commonly decreases to a level below the structural limitations of the load.

Such clutches are used for engaging and driving a header of agricultural machinery such as combines or forage harvesters with the drive line of the machine. Between the clutch and the header, a safety clutch is foreseen, which is designed to slip when an unacceptable torque occurs in the header drive. Such a safety clutch will make sure that at any moment, not only during engagement, but also during normal working conditions, the torque on the header is within certain limits. A frequently occurring problem is that during initial clutch engagement, the torque caused by the header inertia raises above the maximum allowable value of the safety clutch, causing the safety clutch to slip. The elements of the safety clutch rotate over each other in a ratcheting motion, causing an enormous increase in noise.

Although this ratcheting is needed during normal operation to warn the operator that too high a torque is applied to the header, e.g. when a stone starts blocking the header auger, it is not desired to occur upon each engagement of the header. Since the noise generated by the slippage of the safety clutch starts as a loud bang, the operator will experience it as frightening and something to avoid. Additionally, the safety clutch is there to prevent damage to the header due to sporadic high torques, but it is not designed to ratchet every time the header is engaged. The overall life cycle of the safety clutch is significantly reduced if the safety clutch needs to slip upon every renewed engagement of the header.

For the above reasons, the pressure dips are applied to the pressure characteristic of the actuator 20 which engages the clutch, in order to limit the maximum torque generated in the drive line when engaging the header drive. These pressure dips will keep the torque below the value which causes the safety clutch to disengage and thus prevents the ratcheting thereof. The life cycle of the safety clutch is thus increased, since it will only need to operate when an actual torque increase under steady harvesting conditions occurs.

## Claims

1. A method of coupling a header in a combine or forage harvester to a power source by means of a clutch, the clutch comprising at least one pressure plate (40) connected to the power source, at least one clutch plate (50) connected to the header and located near the at least one pressure plate (40) to allow contact with the at least one pressure plate (40), an actuator (20) connected with the at least one pressure plate (40) and capable of forcing the at least one pressure plate (40) against the at least one clutch plate (50), the method comprising the steps of:
- initially increasing the pressure of the actuator (20) for a first time interval to bring the at least one pressure plate (40) into contact with the at least one clutch plate (50);
- gradually increasing the pressure of the actuator (20) during a second time interval to allow the at least one clutch plate (50) to be engaged with the at least one pressure plate (40); and
- after said second time interval, levelling the pressure of the actuator (20) to maintain the engagement of the at least one pressure plate (40) with the at least one clutch plate (50) to allow the header to be driven by the power source,
**characterised in that** the gradually increasing step consists of gradually increasing the pressure of the actuator (20) while applying at least once a pressure decrease lasting a short time interval to create at least one pressure dip for decreasing at least temporarily the torque generated in driving the header,
wherein the at least one pressure dip is generated by a control system, the control system detecting the actual torque applied on the header and decreasing the pressure of the actuator (20) for a short interval when the actual torque exceeds a predetermined value.

2. The method of claim 1, wherein the time required for the initial increase of the pressure of the actuator (20) is minimised by applying a maximum pressure to the actuator (20) until the at least one pressure plate (40) is almost touching the clutch plate (50).

3. The method of claim 2, wherein the increase in pressure to the maximum is reduced to a lower value before allowing gradual increase of the pressure of the actuator (20) to engage the at least one pressure plate (40) with the at least one clutch plate (50).

4. The method as claimed in any of the preceding claims, wherein the application of the at least one pressure dip is repeated until the at least one clutch plate (50) and the at least one pressure plate (40) are engaged sufficiently such that the generated torque is no longer above a predetermined value.

5. A combine or forage harvester comprising a clutch for engaging a header to a power source **characterised in that** it comprises a control operable to engage the clutch according to the method as claimed in any of the claims 1 to 1.

## Patentansprüche

1. Verfahren zum Kuppeln eines Vorsatzgerätes in einem Mähdrescher oder einem Feldhäcksler mit einer Leistungsquelle mit Hilfe einer Kupplung, wobei die Kupplung zumindest eine mit der Leistungsquelle verbundene Druckplatte (40), zumindest eine mit dem Vorsatzgerät verbundene Kupplungsplatte (50), die in der Nähe der zumindest einen Druckplatte (40) liegt, um einen Kontakt mit der zumindest einen Druckplatte (40) zu ermöglichen, und ein Stellglied (20) umfasst, das mit der zumindest einen Druckplatte (40) verbunden ist und in der Lage ist, die zumindest eine Druckplatte (40) gegen die zumindest eine Kupplungsplatte zu drücken, wobei das Verfahren die folgenden Schritte umfasst:
- anfängliches Vergrößern des Druckes des Stellgliedes (20) über ein erstes Zeitintervall, um die zumindest eine Druckplatte (40) in Kontakt mit der zumindest einen Kupplungsplatte (50) zu bringen;
- graduelles Vergrößern des Druckes des Stellgliedes (20) während eines zweiten Zeitintervalls, um einen Eingriff der zumindest einen Kupplungsplatte (50) mit der zumindest einen Druckplatte (40) ermöglichen; und
- nach dem zweiten Zeitintervall Nivellieren des Druckes des Stellgliedes (20), um den Eingriff der zumindest einen Druckplatte (40) mit der zumindest einen Kupplungsplatte (50) aufrecht zu erhalten, um den Antrieb des Vorsatzgerätes durch die Leistungsquelle zu ermöglichen,
**dadurch gekennzeichnet, dass** der Schritt der graduellen Vergrößerung aus einer graduellen Vergrößerung des Druckes des Stellgliedes (20) besteht, während zumindest einmal eine Druckabsenkung angewandt wird, die ein kurzes Zeitintervall dauert, um zumindest einen Druckabfall zur zumindest vorübergehenden Verringerung des bei dem Antrieb des Vorsatzgerätes erzeugten Drehmomentes zu schaffen,
wobei der zumindest eine Druckabfall durch ein Steuersystem erzeugt wird, wobei das Steuersystem das auf das Vorsatzgerät angewandte Ist-Drehmoment feststellt und den Druck des Stellgliedes (20) für ein kurzes Zeitintervall verringert, wenn das Ist-Drehmoment einen vorgegebenen Wert übersteigt.

2. Verfahren nach Anspruch 1, bei dem die für den anfänglichen Druckanstieg des Stellgliedes (20) erforderliche Zeit durch Anlegen eines Maximaldruckes an das Stellglied (20) zu einem Minimum gemacht wird, bis die zumindest eine Druckplatte (40) nahezu die Kupplungsplatte (50) berührt.

3. Verfahren nach Anspruch 2, bei dem der Anstieg des Druckes auf das Maximum auf einen niedrigeren Wert verringert wird, bevor eine graduelle Vergrößerung des Druckes des Stellgliedes (20) ermöglicht wird, um die zumindest eine Druckplatte (40) mit der zumindest einen Kupplungsplatte (50) in Eingriff zu bringen.

4. Verfahren nach einem der vorhergehenden Ansprüche, bei dem die Anwendung des zumindest einen Druckabfalls wiederholt wird, bis die zumindest eine Kupplungsplatte (50) und die zumindest eine Druckplatte (40) ausreichend miteinander in Eingriff stehen, damit das erzeugte Drehmoment nicht länger oberhalb eines vorgegebenen Wertes liegt.

5. Mähdrescher oder Feldhäcksler mit einer Kupplung zum Kuppeln eines Vorsatzgerätes mit einer Leistungsquelle, **dadurch gekennzeichnet, dass** der eine Steuerung umfasst, die betreibbar ist, um die Kupplung entsprechend dem Verfahren nach einem der Ansprüche 1 bis 4 einzurücken.

## Revendications

1. Procédé de couplage d'une tête de coupe dans une moissonneuse-batteuse ou une récolteuse de fourrage à une source de puissance au moyen d'un embrayage, l'embrayage comprenant au moins une plaque de pression (40) connectée à la source de puissance, au moins un disque d'embrayage (50) connecté à la tête de coupe et situé à côté de la au moins une plaque de pression (40) pour permettre d'entrer en contact avec la au moins une plaque de pression (40), un actionneur (20) relié à la au moins une plaque de pression (40) et capable de contraindre la au moins une plaque de pression (40) contre le au moins un disque d'embrayage (50), le procédé comprenant les étapes consistant à :
- augmenter d'abord la pression de l'actionneur (20) pendant un premier intervalle de temps pour mettre la au moins une plaque de pression (40) en contact avec le au moins un disque d'embrayage (50),
- augmenter progressivement la pression de l'actionneur (20) durant un second intervalle de temps pour permettre à le au moins un disque d'embrayage (50) d'être engagé par la au moins une plaque de pression (40), et
- après ledit second intervalle de temps, lisser la pression de l'actionneur (20) pour maintenir l'engagement de ladite au moins une plaque de pression (40) sur le au moins un disque d'embrayage (50) pour permettre à la tête de coupe d'être actionnée par la source de puissance,
**caractérisé en ce que** l'étape d'augmentation progressive consiste à augmenter progressivement la pression de l'actionneur (20) en appliquant au moins une fois une diminution de pression pendant un court intervalle de temps pour créer au moins une chute de pression, afin de diminuer au moins temporairement le couple généré en actionnant la tête de coupe,
dans lequel la au moins une chute de pression est produite par un système de commande, le système de commande détectant le couple effectif appliqué sur la tête de coupe et diminuant la pression de l'actionneur (20) pendant un bref laps de temps lorsque le couple réel dépasse une valeur prédéterminée.

2. Procédé selon la revendication 1, **caractérisé en ce que** le temps nécessaire pour l'augmentation initiale de la pression de l'actionneur (20) est minoré en appliquant une pression maximale sur l'actionneur (20) jusqu'à ce que la au moins une plaque de pression (40) effleure presque le disque d'embrayage (50).

3. Procédé selon la revendication 2, **caractérisé en ce que** l'augmentation de la pression jusqu'au maximum est réduite à une valeur inférieure avant de permettre une augmentation progressive de la pression de l'actionneur (20) pour engager la au moins une plaque de pression (40) sur le au moins un disque d'embrayage (50).

4. Procédé selon l'une quelconque des revendications précédentes, **caractérisé en ce que** l'application de la au moins une chute de pression est répétée jusqu'à ce que le au moins un disque d'embrayage (50) et la au moins une plaque de pression (40) soient engagés suffisamment entre eux de manière à ce que le couple généré ne soit plus supérieur à une valeur prédéterminée.

5. Moissonneuse-batteuse ou récolteuse de fourrage comprenant un embrayage destiné à engrener une tête de coupe sur une source de puissance, **caractérisée en ce qu'**elle comprend un dispositif de commande pouvant fonctionner pour engager l'embrayage selon le procédé selon l'une quelconque des revendications 1 à 5.
